# EUROPÄISCHE PATENTSCHRIFT

(11) **EP 0 578 979 B1**
(45) Veröffentlichungstag und Bekanntmachung des Hinweises auf die Patenterteilung: **05.07.1995**
(21) Anmeldenummer: 93109568.1
(22) Anmeldetag: 16.06.1993
(51) Int. Cl.: C09J 7/00

(54) **Verwendung eines Streifens einer Klebfolie für eine wiederlösbare Verklebung**
Use of a strip of adhesive tape for non-permanent adhesion
Utilisation d'un bande de feuille adhésive pour un collage réversible

(30) Priorität: 11.07.1992 DE 4222849
(43) Veröffentlichungstag der Anmeldung: 19.01.1994
(73) Patentinhaber: Beiersdorf Aktiengesellschaft, 20245 Hamburg (DE)
(72) Erfinder: Lühmann, Bernd, Dr., D-2000 Norderstedt (DE); Karmann, Werner, Dr., D-2000 Hamburg 72 (DE); Junghans, Andreas, D-2000 Hamburg 20 (DE); Schulze, Walter, D-22083 Hamburg (DE)

(56) Entgegenhaltungen:
- DE-A- 3 331 016

## Beschreibung

Die Erfindung betrifft die Verwendung eines Streifens für eine wiederlösbare Verklebung.

Aus der DE-OS 33 31 016 sind Klebfolien für wiederlösbare Klebbindungen bekannt, die es gestatten, daß eine damit hergestellte Klebbindung durch Ziehen an der Klebfolie in Richtung der Verklebungsebene lösbar ist. Mit solchen Klebfolien lassen sich hohe Klebkräfte und Scherfestigkeiten erzielen und Klebverbunde ohne weitere Hilfsmittel wieder lösen, vergleichbar dem Öffnen eines Reißverschlusses oder besser noch vergleichbar dem Öffnen eines Weckglases: Die Gummidichtung wird am Anfasser aus der Dichtungsfuge gezogen.

In der Praxis haben sich jedoch beträchtliche Nachteile bei der Verwendung solcher Klebfolien gezeigt. Zum einen handelt es sich um ein erklärungsbedürftiges Produkt. Derjenige, der bisher noch nicht eine solche Klebfolie verwendet hat, ist leicht geneigt, die Fügeteile so aufeinander zu kleben, daß die Klebfolie zwischen den Fügeteilen verschwindet, nicht mehr herausragt, und also kann man nicht mehr daran ziehen: eine irreversible Verklebung ist die Folge mit entsprechender Enttäuschung. Die Enttäuschung ist aber ebenso groß, wenn bei richtiger Anwendung dann beim Ziehen an der Klebfolie diese abreißt: auch hier ist eine irreversible Verklebung die Folge. Der Vorteil einer wiederlösbaren Klebbindung, die ohne Beschädigung der Fügeteile in einfachster Weise eben durch Ziehen erfolgen kann, wandelt sich in einem drastischen Nachteil, denn gerade die Fügeteile, die wieder getrennt werden sollten, sind nun dauerhaft verklebt. Es bleibt meist nur, die Fügeteile zu zerstören.

Das Problem eines Abrisses beim Ziehen hatten auch die Erfinder der DE-OS 33 31 016 erkannt und diesem ihre besondere Aufmerksamkeit gewidmet. Auf Seite 4, Mitte, wird demgemäß ein bestimmtes Verhältnis von Abzugskraft zu Reißlast, die Reißlast soll stets größer als die Abzugskraft sein und aus Sicherheitsgründen soll sich die Abzugskraft zur Reißlast wie 1:2 bis 1:3 verhalten.

In der Praxis hat sich jedoch gezeigt, daß diese Vorsichtsmaßnahme oft nicht genügt. Eine Verklebung von Substraten auf einem Ausstellungsfreigelände, die nach Ende der Ausstellung wieder getrennt werden soll, ist aufgrund von Abrissen nicht mehr zu trennen. Ebenso etwa auf ein Fenster geklebte Kalender oder Advents-Dekorationen. Auch Poster oder Bilder, so an der Wand befestigt, werden zu irreversiblem Wandschmuck, sobald die Klebfolie beim Ziehen abgerissen ist. Der Schaden ist erheblich, der Kunde verloren. Und auch die Verwendung noch dickerer Klebfolien, wie DE-OS 33 31 016 dies empfihelt, hilft nicht, solche Abrisse zu verhindern.

Auch aus der DE-PS 37 14 453 ist die Verwendung einer solchen Klebfolie bekannt, dort als Stripband bezeichnet, um Übungssprengkörper zerstörungsfrei von Übungsobjekten wieder abnehmen zu können. Man läßt auch hier eine Lasche 6 seitlich aus der Klebfuge hervorstehen, um an dieser zu ziehen und den Verbund so wieder zu lösen. Auch bei dieser Anwendung kommt es in der Praxis zu Abrissen.

Aufgabe der Erfindung war es, hier Abhilfe zu schaffen, insbesondere die Verwendung von Streifen derartiger Klebfolien zu ermöglichen, ohne daß es beim trennenden Ziehen zu Abrissen kommt.

Gelöst wird diese Aufgabe erfindungsgemäß durch die in den Ansprüchen näher gekennzeichneten Parameter.

Die Verwendung einer UV-undurchlässigen Abdeckung an einem Ende des Streifens vermeidet erfolgreich das Auftreten von Abrissen, wenn denn an dem Streifen zum Zwecke des Trennens gezogen wird. Ob dies dadurch geschieht, daß die Ausbildung kleinster, nicht sichtbarer Schädigungen der Klebfolie durch UV-Licht unterbunden wird, von denen ausgehend ein Riss beim Ziehen entstehen und sich fortpflanzen kann, sei dahingestellt. Das Ergebnis jedenfalls ist überzeugend: es gibt keine Reißer mehr. Und aus dem Stand der Technik herleitbar war dies auch nicht, da doch gerade gemäß DE-OS 33 31 016 dieses Problem in einer anderen Richtung angegangen war, nämlich im dicker machen der Klebfolie. Und gemäß DE-PS 37 14 453 war gar kein Ansatz zur Lösung des Problems erkennbar.

Ein weiterer Vorteil der erfindungsgemäßen Verwendung einer UV-undurchlässigen Abdeckung an einem Ende des Streifens liegt darin, daß diese Abdeckung zugleich als Anfasser zum Ziehen dient. Denn damit ist eine gleichmäßigere Kraftübertragung über die gesamte Klebfolienbreite möglich und Spannungsspitzen werden reduziert, die Reißneigung insbe. auf rauhen Untergründen vermindert. Damit wird also das Vermeiden von Rissen beim Ziehen zusätzlich unterstützt.

Vorteilhaft ist zudem, daß im Bereich des Anfassers die Klebfolie nicht eine mit der Zeit überaus hohe Verklebungsfestigkeit erreichen kann. Gerade bei längeren Verklebungen kann dieses starke Aufziehen problematisch werden. Einerseits läßt sich eine solche Klebfolie nur schwer von z.B. der Wand ablösen, andererseits kommt es bei Dehnungsbeanspruchung, wie sie beim Ziehen in Richtung der Verklebungsebene auftritt, insb. bei partiellen Verklebungen auf rauhen Untergründen, z.B. Rauhfasertapeten, leicht zum Einreißen der Klebfolie ausgehend vom Kantenbereich und von der Klebfolienoberfläche. Erfindungsgemäß treten alle diese Probleme nicht auf.

Die eingesetzten Materialien können vorteilhaft solche sein, wie sie in der DE-OS 33 31 016 beschrieben sind, ebenso deren Verarbeitung. Dies Verhältnis von Abzugskraft zu Reißlast der erfindungsgemäß verwendeten Klebfolie ist dabei größer als 1:1,5, insb. aber 1:2 oder größer. Die hohe Elastizität (Dehnfähigkeit) bei gleichzeitig hoher Reißfestigkeit korreliert in aller Regel auch mit einer geringen Plastizität.

Als Elastomere eignen sich insb. solche von hoher Reißfestigkeit und hohem Dehnvermögen.

Bevorzugt eingesetzt werden können Blockcopolymere mit Blöcken bestehend aus Poly(vinylaromaten) und Blöcken bestehend aus Poly(1,3-Dienen) respektive deren Hydrierungsprodukte. Die Polyvinylaromatenblöcke verleihen den Materialien die kohäsiven Eigenschaften und steuern damit wesentlich ihre Reißfestigkeit. Die Polydienblöcke bzw. die aus ihnen durch Hydrierung gewonnenen Folgeprodukte verleihen den Materialien ihre elastischen Eigenschaften. Als Polyvinylaromat wird vornehmlich Polystyrol eingesetzt, als Elastomerblöcke finden bevorzugt Poly(butadien) und Poly(isopren) sowie deren Hydrierungsprodukte Poly(Ethylen/Butylen) und Poly(Ethylen/Propylen) Verwendung.

Geeignet sind primär Dreiblockcopolymere mit Polystyrolendblöcken, nachfolgend als S abgekürzt, und einem Elastomermittelblock, nachfolgend als D abgekürzt, (SDS-Dreiblockcopolymere). Diese können SD-Zweiblockcopolymer enthalten. Geeignet sind prinzipiell auch lineare (SD)ₙ-, radiale und sternförmige (SD)ₙX-Multiblockcopolymere, oder auch Gemische mehrerer der zuvor genannten Blockcopoylmere.

Als Klebrigmacher können die üblichen Klebharze wie z.B. Kohlenwasserstoffharze, Polyterpenharze und Terpenphenolharze sowie Kolophonium und Kolophoniumderivate eingesetzt werden. Die Rezeptierung erfolgt nach den allgemeinen Regeln.

Als weitere Abmischkomponenten können die Klebemassen u.a. enthalten:
- Weichmacheröle.
- Alterungsschutzmittel z.B. in Form von Antioxidantien und UV-Stabilisatoren.
- Füllstoffe. Rezepturbestandteil können sowohl anorganische als auch organische Füllstoffe insbesondere auch Pigmente sein.
- Vernetzer.
Geeignete Haftklebemassen können aus Lösung, aus Dispersion oder als Schmelzhaftkleber verarbeitet werden. Bevorzugt eignet sich die Verarbeitung aus der Schmelze, da mit ihr hohe Masseaufträge bei gleichzeitig hohen Beschichtungsgeschwindigkeiten erzielt werden können.

Geeignet sind Standard-Schmelzhaftkleberbeschichtungsanlagen mit z.B. Breitschlitzdüse, Rollstabdüse oder mit einer geeigneten Düse versehene Ein- und Zweischneckenextruder.

In den folgenden Beispielen soll die Erfindung anhand von Ausführungsbeispielen beschrieben werden, ohne sie damit unnötig einschränken zu wollen. Alle Teile sind Gewichtsteile.

### Beispiel 1

- 51,5 Teile: Lineares SIS-Dreiblockcopolymer mit einem Blockpolystyrolgehalt von 29 Gew.-% und einer Härte gemessen nach Shore A von 60. (Vector 4211)
- 47.0 Teile: teilhydriertes aromatisches C-9 Kohlenwasserstoffharz mit einem Ring & Ball Erweichungspunkt von 100°C mit einem MMAP-Wert von 58°C und einem DACP-Wert von 16°C. (Regalite S 260).
- 1.0 Teile: phenolisches Antioxidans (Irganox 1010).
- 0,5 Teile: Lichtschutzmittel (polymeres sterisch gehindertes Amin)

werden in einem Sigma-blade Mischer bei +160°C bis zur Homogenität geknetet. Die so erhaltene Schmelzhaftklebermasse wird bei +160°C in einer Strichstärke von 410 um über eine Breitschlitzdüse auf eine beidseitig silikonisierte 80 »m starke Trennfolie aus monoaxial verstrecktem Polypropylen beschichtet.

| | |
|---|---|
| - Klebmassedicke | 410 »m |
| - Reißkraft* | 3,9 N/mm² |
| - Reißdehnung* | 1100 % |
| - Klebkraft** | ca. 7 N/cm |
| - Scherstandzeit*** | > 20000 min |

| | |
|---|---|
| * Verstreckungsgeschwindigkeit: 300 mm/min; Musterlänge: 100 mm | |
| ** Stahl, Abzugswinkel: 90°, Abzugsgeschwindigkeit: 300 mm/min, Klebeband auf 25 »m PETP-Folie laminiert | |
| *** Stahl, Verklebungsfläche: 13 x 20 mm², Temperatur = RT, 20N Scherbelastung. | |

### Beispiel 2

- 25,5 Teile: lineares SBS-Dreiblockpolymer mit einem Blockpolystyrolgehalt von 29 Gew.-% und einer Härte gemessen nach Shore A von 65. (Vector 4261)
- 26,0 Teile: lineares SIS-Dreiblockpolymer mit einem Blockpolystyrolgehalt von 29 Gew.-% und einer Härte gemessen nach Shore A von 60. (Vector 4211)
- 47,0 Teile: Pentaerythrithester von hydriertem Kolophonium mit einem Ring & Ball Erweichungspunkt von 101°C und einer Säurezahl von 12. (Pentalyn H-E)
- 1,0 Teile: phenolisches Antioxidans (Irganox 1010)
- 0,5 Teile: Lichtschutzmittel (polymeres sterisch gehindertes Amin)

werden wie unter Beispiel 1 verarbeitet und in einer Strichstärke von 200 »m auf die unter Beispiel 1 beschriebene Trennfolie ausgestrichen.

| | |
|---|---|
| - Klebmassedicke | 200 »m |
| - Klebkraft** | 12,0 N/cm |
| - Scherstandzeit*** | > 10000 min |

| | |
|---|---|
| **, *** siehe unter Beispiel 1 | |

### Beispiel 3

- 51.5 Teile: Lineares SIS-Dreiblockpolymer mit einem Blockpolystyrolgehalt von 29 Gew.-% und einer Härte gemessen nach Shore A von 60 (Vector 4211)
- 47.0 Teile: Pentaerythrithester von hydriertem Kolophonium mit einem Ring & Ball Erweichungspunkt von 101°C und einer Säurezahl von 12. (Pentalyn H-E)
- 1,0 Teile: phenolisches Antioxidans (Irganox 1010)
- 0,5 Teile: Lichtschutzmittel (polymeres sterisch gehindertes Amin)

werden wie unter Beispiel 1 verarbeitet und in einer Strichstärke von 400 »m auf die unter Beispiel 1 beschriebene Trennfolie ausgestrichen.

| | |
|---|---|
| - Klebmassedicke | 400 »m |
| - Klebkraft** | ca. 25 N/cm |
| - Scherstandeit*** | > 10000 min |
| - Reißdehnung* | 1100 % |
| - Reißkraft* | 4,1 N/mm² |

| | |
|---|---|
| *, **, *** siehe unter Beispiel 1 | |

### Beispiel 4

- 40,0 Teile: Lineares SEBS-Dreiblockpolymer mit 40 Gew.-% SEB-Zweiblockcopolymer, einem Blockpolystyrolgehalt von 13 Gew.-% und einer Härte gemessen nach Shore A von 65. (Kraton G 1657)
- 50.0 Teile: Pentaerythrithester von hydriertem Kolophonium mit einem Ring & Ball Erweichungspunkt von 101°C und einer Säurezahl von 14. (Foral 105-E)
- 10 Teile: eines aliphatischen Öles (V 7047, Shell)
- 1,0 Teile: phenolisches Antioxidans
- 0,5 Teile: Lichtschutzmittel (polymeres sterisch gehindertes Amin)

werden wie unter Beispiel 1 verarbeitet und in einer Strichstärke von 200 »m auf die unter Beispiel 1 beschriebene Trennfolie ausgestrichen.

SEBS-basierende Haftklebemassen eignen sich insbesondere, wenn hohe Anforderungen an die Alterungsbeständigkeit gestellt werden.

### Herstellung von Blattware (Strips)

Ballenware aus den Beispielen 1-4 (bestehend aus doppelseitigem Haftklebeband mit einseitiger Trennfolienabdeckung) wird an einer Anlage bestehend aus 2 Kaschierstationen, einer Dekaschierstation, zwei weiteren Kaschierstationen, einer Längsschneideeinrichtung und einer Vereinzelungsanlage (Formatstanze) zu Blattware (Strips) verarbeitet. Hierzu wird auf die trennfolienfreie Seite (Vorderseite) von 120 mm breiter Ballenwaren an der 1. Kaschierstation mittig eine 20 mm breite und 15 »m starke Polyethylenterephthalatfolie kaschiert. An der 2. Kaschierstation wird silikonisierte Polyethylentrennfolie in 120 mm Breite derart zukaschiert, daß die Trennfolie beidseitig ca. 2,5 mm über die Klebemasse übersteht. Nachdem die Trennfolienabdeckung der Rückseite an einer Dekaschierstation ausgedeckt ist, werden die gleichen Eindeckungen (20 mm breite Polyethylenterephthalatfolie mittig, 125 mm breite silikonisierte Polyethylenfolie vollflächig mit 2,5 mm Überstand beidseitig) für die Rückseite vorgenommen. Die Vereinzelung zu Blattware von 62,5 mm Länge und 19 mm Breite wird mittels Aufschneiden (in Längsrichtung) und durch Stanzen an einer Formatstanze erreicht.

### Typische Abmessungen der Blattware

### Klebemasse

Breite 3 mm bis 50 mm, bevorzugt 5 mm bis 30 mm
Länge 15 mm bis 200 mm, bevorzugt 25 mm bis 80 mm
inklusive Anfasser mit bevorzugt 8 mm bis 25 mm Länge
Dicke 100 »m bis 2000 »m, bevorzugt 200 »m bis 1000 »m

### Trennpapiere // Trennfolien

- Breite:: siehe oben
- Länge:: wird vorteilhaft so gewählt, daß zusätzlich zur Klebmasse der Anfasser teilweise verdeckt ist, so daß das Trennpapier über die Haftklebemasse übersteht und so leicht von dieser gelöst werden kann.

### Anfasser

Der Anfasser kann, wie beschrieben, durch Abdecken mit einer UV-undurchlässigen Kunststoff-Folie z.B. aus Polyester ausgebildet sein oder aber z.B. auch durch Inertisieren der Klebmasse mittels UV-undurchlässiger Bedruckung. Auch Papier ist grundsätzlich geeignet.

Breite und Länge: siehe oben
- Dicke:: Die Dicke der verwendeten Folien und Papiere ist vorteilhafterweise so zu wählen, daß bei Eindringen des Anfasserbereiches in die Klebfuge im haftklebrigen Bereich eine möglichst vollflächige Verklebung erreicht wird.

Die erfindungsgemäß verwendeten Streifen können insbesondere als Blattware oder Rollenware konfektioniert werden. Blattware kann z.B. beidseitig mit leicht lösbarem Trennlaminat versehen sein, etwa mit Trennfolie oder Trennpapier. Blattware kann aber auch einseitig mit Trennlaminat abgeckt und gestapelt sein, wobei hier die Trennlaminate bevorzugt eine beidseitig unterschiedliche Trennkraft aufweisen, die insbesondere so gewählt wird, daß sich beim Lösen eines Stückes Blattware dieses von dem darunterbefindlichen Trennlaminat löst, jedoch das Trennlaminat auf dem darunterbefindlichen nächsten Stück Blattware ausreichend haftet.

Rollenware ist vorzugsweise einseitig mit Trennfolie oder Trennpapier abgedeckt, mit in regelmäßigen Abständen beidseitig klebfreiem Bereich (Anfasser), und ist an der Kontaktlinie zwischen klebfreiem Bereich und haftklebrigem Bereich vorteilhaft derart perforiert, daß sich Blattware (Strips) entnehmen läßt.

## Patentansprüche

1. Verwendung eines Streifens einer Klebfolie für eine wiederlösbare Verklebung
auf Basis von thermoplastischem Kautschuk und klebrigmachenden Harzen, wobei die Klebfolie hohe Elastizität und geringe Plastizität aufweist und wobei die Adhäsion geringer als die Kohäsion ist, das Haftvermögen beim Dehnen der Folie weitgehend verschwindet, das Verhältnis von Abzugskraft zu Reißlast mindestens 1:1,5 ist, und wobei eine damit hergestellte Klebbindung durch Ziehen an der Klebfolie in Richtung der Verklebungsebene lösbar ist,
wobei das eine Ende des Streifens beidseits mit einer UV-undurchlässigen Abdeckung versehen ist, die zugleich als Anfasser zum Ziehen dient.

2. Verwendung eines Streifens einer Klebfolie nach Anspruch 1, worin die Masse selbstklebend eingestellt ist.

3. Verwendung eines Streifens einer Klebfolie nach Anspruch 1, wobei die Masse wärmeaktivierbar eingestellt ist.

4. Verwendung eines Streifens einer Klebfolie nach Anspruch 1, enthaltend Antioxidantien. UV-Stabilisatoren, Farbstoffe, Füllstoffe und/oder andere übliche Hilfsmittel.

5. Verwendung eines Streifens einer Klebfolie nach Anspruch 1, mit einer Dicke von 0,2 mm bis 1,2 mm.

6. Verwendung eines Streifens einer Klebfolie nach Anspruch 1, wobei sich die Abzugskraft zur Reißlast wie 1:1,5 bis 1:5 verhalten.

7. Verwendung eines Streifens einer Klebfolie nach Anspruch 1, wobei die Rohstoff-Mischung heiß geknetet und extrudiert ist.

8. Verwendung eines Streifens einer Klebfolie nach Anspruch 1, wobei die UV-undurchlässige Abdeckung dimensionsstabil ist, insbesondere aus einer beidseitig auf die Klebfolie aufkaschierten UV-imdurchlässigen Kunststoffolie besteht.

9. Verwendung eines Streifens einer Klebfolie nach Anspruch 1, wobei der durch die UV-undurchlässige Abdeckung gebildete Anfasser 8 bis 25 mm lang ist.

10. Streifen einer Klebfolie für eine wiederlösbare Verklebung nach einem der Ansprüche 1 - 9.

## Claims

1. Use of a strip of an adhesive film for a re-releasable adhesive bond based on thermoplastic elastomer and tackifying resins, the adhesive film having high elasticity and low plasticity and the adhesion being lower than the cohesion, the adhesive strength largely disappearing during extension of the film, the ratio of peel strength to tear strength being at least 1:1.5, and an adhesive bond produced therewith being releasable by pulling on the adhesive film in the direction of the plane of adhesion, where one end of the strip is provided on both sides with a UV-opaque covering which at the same time serves as a tab for pulling.

2. Use of a strip of an adhesive film according to Claim 1, wherein the composition is adjusted so as to be self-adhesive.

3. Use of a strip of an adhesive film according to Claim 1, where the composition is adjusted so as to be heat-activatable.

4. Use of a strip of an adhesive film according to Claim 1, containing antioxidants, UV stabilisers, colourants, fillers and/or other conventional auxiliaries.

5. Use of a strip of an adhesive film according to Claim 1, having a thickness of 0.2 mm to 1.2 mm.

6. Use of a strip of an adhesive film according to Claim 1, where the ratio of the peel strength to the tear strength is 1:1.5 to 1:5.

7. Use of a strip of an adhesive film according to Claim 1, where the raw materials mixture has been kneaded at elevated temperature and extruded.

8. Use of a strip of an adhesive film according to Claim 1, where the UV-opaque covering is dimensionally stable and comprises in particular a UV-opaque plastic film laminated on both sides of the adhesive film.

9. Use of a strip of an adhesive film according to Claim 1, where the grip formed by the UV-opaque covering is 8 to 25 mm long.

10. Strip of an adhesive film for a re-releasable adhesive bond according to one of Claims 1-9.

## Revendications

1. Utilisation d'un ruban d'une pellicule adhésive pour un collage à nouveau détachable
à base de caoutchouc thermoplastique et de résines agglutinantes, la pellicule adhésive présentant une élasticité élevée et une plasticité faible et l'adhésion étant inférieure à la cohésion, l'aptitude à l'adhésion disparaissant en majeure partie lors de l'élongation de la pellicule, le rapport de la force d'arrachement à la charge de rupture étant d'au moins 1 : 1,5, et une liaison adhésive préparée avec celle-ci étant détachable par tirage sur la pellicule adhésive dans la direction du plan de collage,
une des extrémités du ruban étant pourvue des deux côtés d'une couverture opaque aux rayons ultraviolets, qui sert en même temps de languette de prise pour le tirage.

2. Utilisation d'un ruban d'une pellicule adhésive selon la revendication 1, la masse étant réglée pour être auto-adhésive.

3. Utilisation d'un ruban d'une pellicule adhésive selon la revendication 1, la masse étant réglée pour être activable par la chaleur.

4. Utilisation d'un ruban d'une pellicule adhésive selon la revendication 1, contenant des agents antioxydants, des agents de stabilisation vis-à-vis des rayons ultraviolets, des colorants, des charges et/ou d'autres adjuvants usuels.

5. Utilisation d'un ruban d'une pellicule adhésive selon la revendication 1, ayant une épaisseur de 0,2 mm à 1,2 mm.

6. Utilisation d'un ruban d'une pellicule adhésive selon la revendication 1, la force d'arrachement par rapport à la charge de rupture se comportant dans un rapport de 1 : 1,5 à 1 : 5.

7. Utilisation d'un ruban d'une pellicule adhésive selon la revendication 1, le mélange de matières premières étant pétri et extrudé à chaud.

8. Utilisation d'un ruban d'une pellicule adhésive selon la revendication 1, la couverture opaque aux rayons ultraviolets étant stable pour ce qui est des dimensions, étant constituée en particulier d'une pellicule de résine synthétique opaque aux rayons ultraviolets contre-laminée des deux côtés sur la pellicule adhésive.

9. Utilisation d'un ruban d'une pellicule adhésive selon la revendication 1, la languette de prise formée par la couverture opaque aux rayons ultraviolets étant d'une longueur de 8 à 25 mm.

10. Ruban d'une pellicule adhésive pour un collage à nouveau détachable, selon l'une quelconque des revendication 1 - 9.
